**Europäisches Patentamt**

**European Patent Office**

**Office européen des brevets**

(11) Veröffentlichungsnummer: **0 172 533**
**B1**

(12) **EUROPÄISCHE PATENTSCHRIFT**

(45) Veröffentlichungstag der Patentschrift: **07.11.90**

(21) Anmeldenummer: **85110234.3**

(22) Anmeldetag: **15.08.85**

(51) Int. Cl.⁵: **C 21 D 1/34,** C 21 D 9/00, F 27 B 9/20

(54) **Verfahren zur Erhitzung von Walzbarren und Anordnung zur Durchführung des Verfahrens.**

(30) Priorität: **21.08.84 SE 8404164**

(43) Veröffentlichungstag der Anmeldung:
**26.02.86 Patentblatt 86/09**

(45) Bekanntmachung des Hinweises auf die
Patenterteilung:
**07.11.90 Patentblatt 90/45**

(84) Benannte Vertragsstaaten:
**DE FR GB**

(56) Entgegenhaltungen:
DE-A-2 363 595    FR-A-1 408 638
DE-B-1 236 545    FR-A-2 417 737
DE-C-1 268 644    US-A-3 342 468

PATENT ABSTRACTS OF JAPAN, Band 6, Nr.
149, 10. August 1982; & JP - A - 57 70220
(MITSUBISHI DENKI) 30.04.1982

PATENT ABSTRACTS OF JAPAN, Band 8, Nr.
126, 13. Juni 1984; & JP - A - 59 38323
(SUMITOMO) 02.03.1984

(73) Patentinhaber: **ASEA AB**
**S-721 83 Västeras (SE)**

(72) Erfinder: **Backlund, Hans**
**Klockartorpsgatan 15 F**
**S-723 44 Västeras (SE)**
Erfinder: **Henriksson, Bengt**
**Pingstliljevägen 16**
**S-722 43 Västeras (SE)**
Erfinder: **Sundberg, Yngve**
**Helikoptergatan 10**
**S-723 48 Västeras (SE)**
Erfinder: **Svanberg, Carl-Henrik**
**Djäknebergsgatan 11 A**
**S-724 61 Västeras (SE)**

(74) Vertreter: **Boecker, Joachim, Dr.-Ing.**
**Rathenauplatz 2-8**
**D-6000 Frankfurt a.M. 1 (DE)**

## Beschreibung

Die vorliegende Erfindung betrifft eine Anordnung zur gleichmäßigeren Erhitzung von Walzbarren gemäß dem Oberbegriff des Anspruches 1. Eine solche Anordnung ist bekannt aus der DE-A-2363 595.

Beim Walzen von Blech werden die Walzbarren in mit Brennstoff beheizten Öfen erhitzt, wobei die Walzbarren auf wassergekühlten Schienen oder Trägern liegen. Dies hat zur Folge, daß die Walzbarren keine einheitliche Temperatur annehmen, sondern an den Auflagestellen auf den wassergekühlten Schienen eine geringere Temperatur als an den anderen Stellen erreichen. Diese Stellen am erhitzten Walzbarren werden "Schienenmale" genannt. Die Schienenmale kommen in Abständen von ungefähr einen Meter vor. Die Länge der Walzbarren ist unterschiedlich, jedoch ist eine maximale Länge von 10 Metern üblich.

Das Auftreten der Schienenmale hat folgende nachteilige Auswirkungen:

1. Beim Walzen muß der Walzdruck und die Geschwindigkeit in dem folgenden Walzenstand jedem Schienenmal angepaßt werden.

2. Der Takt, mit dem die Walzbarren aus dem mit Brennstoff beheizten Ofen herausgenommen werden, muß in gewissen Fällen wegen der Schienenmale herabgesetzt werden.

3. Wegen der an den Schienenmalen geringeren Temperaturen treten beim fertig gewalzten Blech Dickenunterschiede auf, die ein großes Problem bei der Erreichung vorgeschriebener Qualitäten darstellen.

4. Infolge der herabgesetzten Temperatur und des erforderlichen höheren Walzdruckes werden die Walzen schneller abgenutzt.

5. Wegen des höheren Walzdruckes und der höheren Geschwindigkeit ist eine größere installierte Motorleistung erforderlich.

Bei der aus der DE-A-2363 595 bekannten Anordnung sind zur Beseitigung der Schienenmale im Zuge der Rollenbahn zwischen Heizofen und Walzwerk Induktionserhitzer angeordnet, auf denen die Walzbarren verharren, während die durch die Schienenmale gekennzeichneten unzureichend erhitzten Stellen des Walzbarrens durch die Induktionserhitzer nacherhitzt werden. Durch diese räumliche Anordnung der Induktionserhitzer verlängert sich der Weg zwischen Heizstation und Walzwerk. Außerdem wird durch einen vorauslaufenden, mit starken Schienenmalen versehenen Walzbarren der Transport eines nachfolgenden Walzbarren zum Walzwerk, bei dem auf eine Nachbehandlung verzichtet werden kann, behindert.

Der Erfindung liegt die Aufgabe zugrunde eine Anordnung zur gleichmäßigeren Erhitzung von Walzbarren zu entwickeln, bei der die Unterbringung der Induktionserhitzer den Transportweg zwischen Heizofen und Walzwerk weder verlängern noch behindern.

Zur Lösung dieser Aufgabe wird eine Anordnung zur gleichmäßigeren Erhitzung von Walzbarren gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den weiteren Ansprüchen genannt.

Durch die seitliche Anordnung der Induktionserhitzer zur Nacherhitzung bzw. Ausgleichserhitzung außerhalb der eigentlichen zum Walzwerk führenden Rollenbahn wird eine günstige Raumausnutzung dieses Teils der Gesamtanlage erreicht. Eine solche sackartige Seitenstation kann in einem niedrigeren und engeren Anbau an die ansonsten große und hohe Werkhalle untergebracht werden. Der direkte Weg vom Heizofen zum Walzwerk wird auf ein Minimum verkürzt, da in Fällen, in denen auf die Nacherhitzung verzichtet werden kann, die Induktionserhitzer aus dem Gesamtweg ausgespart werden können.

Ferner ist es möglich, einen Walzbarren vom Heizofen direkt zum Walzwerk zu transportieren, während ein zuvor erhitzter noch von den Induktionserhitzern behandelt wird.

Anhand der in den Figuren gezeigten Ausführungsbeispiele soll die Erfindung näher erläutert werden. Es zeigen

Figur 1 in schematischer Darstellung ein Ausführungsbeispiel einer Anordnung gemäß der Erfindung in Draufsicht,

Figur 2 bis 4 verschiedene Ausführungsformen für die bei der Anordnung gemäß der Erfindung verwendeten Induktionsspulen.

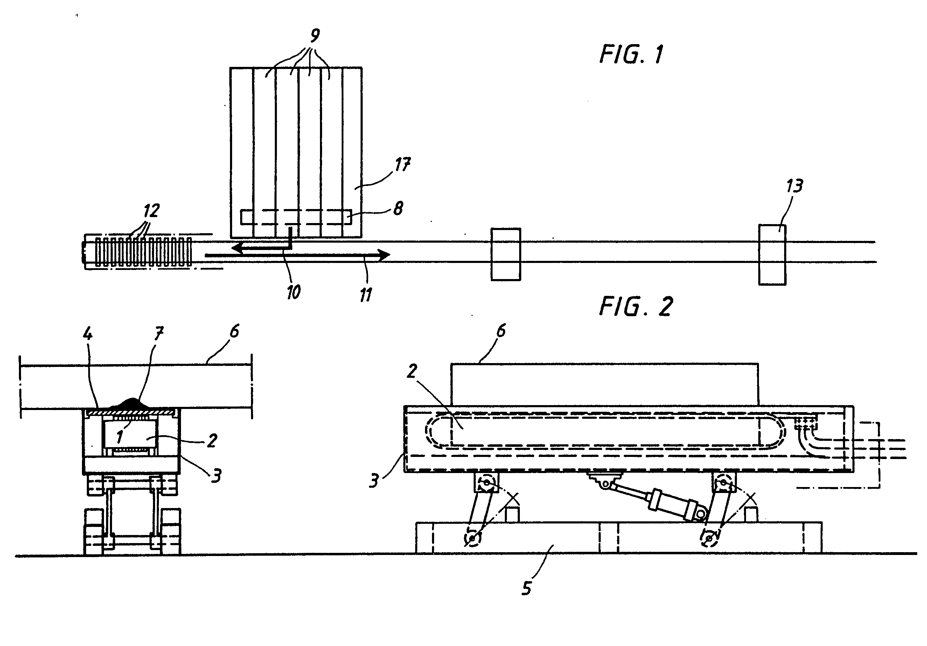

In Figur 1 ist mit 17 ein mit Brennstoff beheizter Ofen bezeichnet, in welchem Walzbarren 8 erhitzt werden. Die Walzbarren 8 liegen im Ofen auf Schienen oder Träger 9, die zweckmäßigerweise wassergekühlt sind. Die Abschnitte der Walzbarren 8, die an die Schienen oder Träger 9 angrenzen, werden weniger stark als die übrigen Teile der Walzbarren erhitzt, wodurch die oben genannten Schienenmale entstehen. Wenn ein Walzbarren den Ofen 17 beispielsweise nach links in Figur 1 verläßt, also in der Laufrichtung 10 der Rollenbahn, die den aus dem Ofen 17 austrentenden Walzbarren aufnimmt, dann wird der Walzbarren in eine Lage gefahren, in der jedes Schienenmal genau über einer Induktionsspule 12 liegt. Die Induktionsspule wird an eine Spannungsquelle angeschlossen, und das von der Induktionsspule erregte magnetische Feld induziert einen Strom im Bereich der Schienenmale, die dadurch erhitzt werden. Wenn die Bereiche, in denen die Schienenmale liegen, dieselbe Temperatur wie der Walzbarren im übrigen erreicht haben, wird die Erhitzung abgebrochen.

Auf diese Weise werden die eingangs genannten Nachteile beim Walzen beseitigt, wodurch ein einfacheres Walzverfahren ermöglicht wird. Außerdem erhält man wirtschaftlich bedeutende Vorteile hinsichtlich einer verbesserten Qualität des gewalzten Endproduktes, einer erhöhten Produktion, eines geringeren Walzenverschleißes und einer geringeren Motorleistung.

Im Anschluß an die Nacherhitzung durch Induktionsspulen werden die Walzbarren 8, vorzugsweise mittels der Rollenbahn in der angedeuteten Laufrichtung 11 zum Walzwerk 13 transportiert (siehe Pfeil 11).

Die Induktionsspule(n) 12 ist/sind hinter der Ausschubstelle für die Walzbarren aus dem mit Brennstoff beheizten Ofen 17 oder irgendwo zwischen dieser Ausschubstelle und dem ersten Walzenpaar 13 angeordnet.

Figur 2 zeigt eine Induktionsspule 1 aus kupfer, die um ein Blechpaket 2 herumgewickelt ist. Mit 3 ist eine Schutzhülle und mit 4 ein feuerfester Schutz bezeichnet. Mit Hilfe des Rahmens 5 kann die Spule 1 angehoben und gesenkt werden. Der Walzbarren ist mit 6 bezeichnet, und mit 7 ist ein Schienenmal bezeichnet, also eine Stelle, an der der Walzbarren im Ofen auf einer Schiene oder einen Träger gelegen hat und daher eine niedrigere Temperatur hat. Dieser Abschnitt wird mittels der Induktionsspule 1 erhitzt. Es können mehrere Induktionsspulen verwendet werden, zum Beispiel eine für jedes Schienenmal (siehe Figur 1).

Die Induktionsspulen sind als separate Heizstation an der Seite beziehungsweise hinter oder vor dem Ofen 17 angeordnet.

Die Frequenz des Speisestroms für die Induktionsspule(n) 1 wird so gewählt, daß die Eindringtiefe des induzierten Stroms in das Material mit der Tiefe des weniger stark erhitzten Bereiches des Walzbarren übereinstimmt.

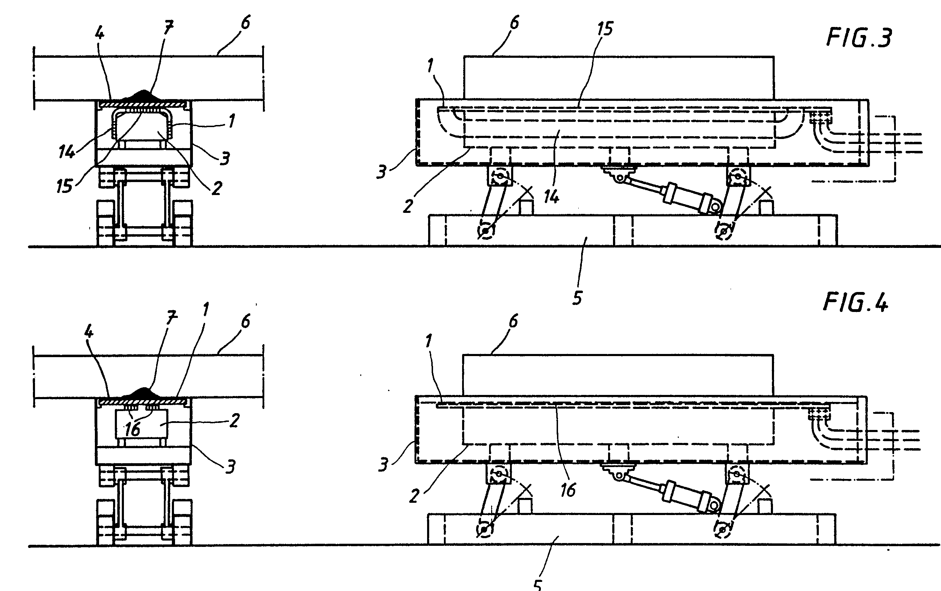

Figur 3 zeigt eine Ausführungsform, die sich von der nach Figur 2 dadurch unterscheidet, daß die Induktionsspule teilweise als Flachspule 15 ausgebildet ist, wobei ein Teil 14 seitlich des Walzbarrens verläuft. Siehe insbesondere die Querschnittsdarstellung im linken Teil der Figur.

Figur 4 zeigt eine Ausführungsform mit einer reinen Flachspule 16, die auf dem Blechpaket 2 liegend angeordnet ist.

Im Anschluß an die Induktionsspule können nicht dargestellte Temperaturmeßgeräte angeordnet werden zur Steuerung oder Regelung des Stromes der Induktionsspulen und somit der Induktionserwärmung zur Erreichung einer im gesamten Walzbarren im wesentlichen einheitlichen Temperatur.

Die vorstehend beschriebenen Anordnungen können im Rahmen des offenbarten allgemeinen Erfindungsgedanken in vielfacher Weise variiert werden.

**Patentansprüche**

1. Anordnung zur gleichmäßigeren Erhitzung von Walzbarren mit einem mit Brennstoff beheizbaren Ofen (17), durch welchen die Walzbarren auf Schienen oder Trägern liegend hindurchgeleitet werden, mit einer Rollenbahn zur Aufnahme der aus dem Ofen (17) austretenden Walzbarren und mit an dieser Rollenbahn angeordneten Induktionserhitzern zur Beseitigung der durch die Auflage auf den Schienen oder Trägern im Ofen an den Walzbarren entstandenen Schienenmale, dadurch gekennzeichnet, daß die Induktionserhitzer (12) in einer separaten Heizstation untergebracht sind, die in entgegengesetzter Richtung zu der zum Walzwerk führenden Richtung der Rollenbahn Angeordnet ist.

2. Anordnung nach Anspruch 1, dadurch gekennzeichnet, daß die Induktionsspulen (12) unter den Walzbarren und deren Schienenmalen (7) angeordnet sind.

3. Anordnung nach einem der vorhergehenden Ansprüche, dadurch gekennzeichnet, daß die Frequenz des die Induktionsspulen (12) speisenden Stromes so gewählt wird, daß die Eindringtiefe des induzierten Stromes in das Material mit der tiefe der im Ofen weniger erhitzten Bereiche übereinstimmt.

**Revendications**

1. Agencement destiné à chauffer uniformément des lingots pour laminage, comprenant un four (17) qui peut être chauffé par du combustible et dans lequel les lingots pour laminage glissent sur des rails ou sur des poutrelles, un transporteur à rouleaux de réception des lingots pour laminage sortant du four (7) et des agencements de chauffage par induction, montés sur ce transporteur à rouleaux et destinés à éliminer les marques de rail créées sur les lingots pour laminage par l'appui sur les rails ou les poutrelles dans le four, caractérisé en ce que les agencements de chauffage par induction (12) sont logés dans un poste de chauffage distinct, qui est disposé dans le sens opposé au sens du transporteur à rouleaux qui mène au laminoir.

2. Agencement selon la revendication 1, caractérisé en ce que les bobines d'induction (12) sont disposées sous les lingots pour laminage et leur marques de rail (7).

3. Agencement selon l'une des revendications précédentes, caractérisé en ce que la fréquence du courant d'alimentation des bobines d'induction (12) est choisie de manière que la profondeur de pénétration du courant induit dans le matériau coïncide avec la profondeur des parties moins chauffées dans le four.

**Claims**

1. Arrangement for uniform heating of rolling bars by means of a fuel-fired furnace (17) through which the rolling bars, lying on rails or skids, are passed, with a roller conveyor for receiving the rolling bars emerging from the furnace (17), and with induction heaters arranged at the roller conveyor for removing the skid marks formed by the resting of the rolling bars on the rails or skids in the furnace, characterized in that the induction heaters (12) are installed in a separate heating station, which is located in the opposite direction of the roller conveyor direction leading to the rolling mill.

2. Arrangement according to claim 1 characterized in that the induction coils (12) are located below the rolling bars and the skid marks (7) thereon.

3. Arrangements according to any of the preceding claims, characterized in that the frequency of the supply current for the induction coils (12) is selected such that the penetration depth of the current induced in the material is equal to the depth of the sections which have been less heated in the furnace.

FIG. 1

FIG. 2

EP 0 172 533 B1

FIG.3

FIG.4

EP 0 172 533 B1